# EUROPÄISCHE PATENTSCHRIFT

(11) **EP 1 411 266 B1**
(45) Veröffentlichungstag und Bekanntmachung des Hinweises auf die Patenterteilung: **14.12.2005**
(21) Anmeldenummer: 03020977.9
(22) Anmeldetag: 17.09.2003
(51) Int. Cl.: F16F 9/56

(54) **Stufenlos blockierbare Feststellvorrichtung**
Continuously-variable, blockable fixing device
Dispositif de fixation bloquable à variabilité continue

(30) Priorität: 15.10.2002 DE 10247945
(43) Veröffentlichungstag der Anmeldung: 21.04.2004
(73) Patentinhaber: Stabilus GmbH, 56070 Koblenz (DE)
(72) Erfinder: Mintgen, Rolf, Dipl.-Ing. (TH), 56743 Thür (DE); Schwab, Wilhelm, Dipl.-Ing. (FH), 56564 Neuwied (DE); Muders, Paul, Dipl.-Ing., 56321 Rhens (DE)
(74) Vertreter: Klein, Thomas

(56) Entgegenhaltungen:
- WO-A-00/42282
- DE-A- 10 003 880
- DE-U- 20 007 762
- GB-A- 170 786
- US-A- 1 521 682
- US-A- 1 931 735
- US-A- 5 829 097

## Beschreibung

Gegenstand der Erfindung ist eine stufenlos blockierbare Feststellvorrichtung mit einem Gehäuse und einer außerhalb des Gehäuses drehbar beaufschlagbaren Welle, die in das Gehäuse ragt, mit einem in dem Gehäuse befindlichen fluidgefüllten Arbeitsraum mit einem bewegbaren Kolben und einem Blockierventil. Die Feststellvorrichtung findet Verwendung an schwenkbar gelagerten Teilen, vorzugsweise für Türen von Kraftfahrzeugen. Eine solche Feststellvorrichtung wird zum Beispiel in DE 1 000 3880 A offenbart.

Bei derartigen stufenlos blockierbaren Feststellvorrichtungen ist es bekannt, eine axial bewegliche Kolbenstange in einem Zylinder anzuordnen, dessen Arbeitsraum mit einem Fluid gefüllt ist. In der Kolbenstange ist ein Blockierventil vorgesehen, welches das stufenlose Blockieren der Kolbenstange und damit der Feststellvorrichtung ermöglicht. Das Blockierventil wird von einem Stellelement betätigt, das am anderen Ende der Kolbenstange angreift. Mittels eines in der Kolbenstange angeordneten Übertragungselementes ist das Stellelement mit dem Blockierventil verbunden. Ein zusätzliches Sicherheitsventil gewährleistet den Schutz der Feststellvorrichtung vor Beschädigungen, die bei großen auf die Feststellvorrichtung wirkenden Kräften auftreten können. Über eine Aufnahme, die sich an dem aus dem Zylinder ragenden Ende der Kolbenstange befindet, ist die Feststellvorrichtung mit dem zu verschwenkenden Bauteil verbunden. Das der Kolbenstange gegenüberliegende Ende des Zylinders weist ebenfalls eine Aufnahme auf, mit der die Feststellvorrichtung an einem zweiten Bauteil befestigt ist, an dem auch das zu verschwenkende Bauteil angeschlagen ist. Die Feststellvorrichtung ist daher in ihrer axialen Erstreckung senkrecht zur Schwenkachse des zu verschwenkenden Bauteils angeordnet.

Die Feststellvorrichtung besitzt aufgrund ihrer Bauweise mit Zylinder, Kolbenstange in axialer Erstreckung eine nicht unerhebliche Länge. Der für die Feststellvorrichtung notwendige Bauraum ist jedoch wesentlich größer, da der von der Kolbenstange ausgeführte Kolbenhub berücksichtigt werden muß. Insbesondere bei Kraftfahrzeugtüren befindet sich dadurch die Feststellvorrichtung im wesentlichen im Innern der Kraftfahrzeugtür, so daß der von der Feststellvorrichtung benötigte Bauraum für andere Einrichtungen nicht zur Verfügung steht. Aufgrund ihrer Komplexität ist die Vorrichtung mit der hohl ausgeführten Kolbenstange und den darin angeordneten Bauteilen störanfällig. Die Vielzahl von Bauteilen erhöht den Aufwand für die Feststellvorrichtung in der Herstellung und Montage.

Der vorliegenden Erfindung liegt daher die Aufgabe zugrunde, eine stufenlos blockierbare Feststellvorrichtung zu schaffen, die einen geringen Bauraum aufweist. Die Feststellvorrichtung soll darüber hinaus möglichst einfach in der Herstellung, Montage und Wartung sein.

Diese Aufgabe wird erfindungsgemäß dadurch gelöst, daß der Arbeitsraum insbesondere zwei mit ihm verbindbare nebeneinander liegende Teilkammern aufweist, in denen die Kolben verschiebbar geführt und von einer Taumelscheibe verschiebbar antreibbar sind, wobei die Taumelscheibe durch die Welle drehbar antreibbar ist, mit je einer Steuervorrichtung in den Teilkammern, durch die über Blockierventile die Teilkammern mit dem Arbeitsraum und über Durchlaßventile der Arbeitsraum mit den Teilkammern verbindbar sind.

Der Vorteil der erfindungsgemäßen Vorrichtung besteht darin, daß mit dieser Vorrichtung eine einfach aufgebaute Vorrichtung gefunden wurde, die wenige Bauteile besitzt und zuverlässig in ihrer Funktion ist. Die Anordnung der beiden nebeneinander liegenden Teilkammern ermöglicht eine Reduzierung der Baugröße in axialer Erstreckung. Die Feststellvorrichtung ist dadurch sehr kompakt und ermöglicht einen vielseitigen Einsatz. Aufgrund der wenigen Bauteile ist die Feststellvorrichtung in Herstellung und Montage kostengünstig. Der Aufbau der Feststellvorrichtung ermöglicht überdies die Anordnung außerhalb des zu verschwenkenden Teils, so daß der Bauraum innerhalb des zu verschwenkenden Teils für andere Vorrichtungen und Einbauten zur Verfügung steht.

Zum Betätigen der Feststellvorrichtung ist die Welle mit einem Stellglied verbunden, welches senkrecht an dieser angeordnet ist. Dies ermöglicht die Anordnung der Feststellvorrichtung in der Schwenkachse des zu verschwenkenden Teils oder parallel dazu. Überdies erlaubt die kompakte Bauweise der Feststellvorrichtung die Anordnung im Bereich eines Scharniers, so daß die erfindungsgemäße Feststellvorrichtung ausschließlich den ohnehin bereits vorhandenen Bauraum benutzt. In einer besonders günstigen Ausgestaltung ist das Scharnier das Stellglied.

Die Steuervorrichtungen umfassen je ein Blockierventil und ein Durchlaßventil. Das Blockierventil ist in einer vorteilhaften Ausgestaltung ein federbelastetes Rückschlagventil, welches in Richtung der anderen Teilkammer öffnet. Diese Einbaulage ermöglicht ein besonders schnelles Ansprechen der Feststellvorrichtung, da lediglich in dem Fluid zwischen Kolben und Steuervorrichtung der Druck zum Öffnen des Blockierventils aufgebaut werden muß. Durch die Ausgestaltung der Blockierventile mit einer Feder kann das Fluid erst ab einem bestimmten Druck aus der Teilkammer in die andere Teilkammer strömen. Zudem werden hohe Feststellkräfte im blockierten Zustand gewährleistet. Insofern ist durch geeignete Gestaltung der Blockierventile das Verhalten der Feststellvorrichtung, insbesondere die Leichtgängigkeit, einstellbar.

Die Durchlaßventile ermöglichen das Einströmen des aus der anderen Teilkammer verdrängten Fluids. Gleichzeitig gewährleisten sie, daß das aus einer Teilkammer verdrängte Fluid ausschließlich über das Blockierventil die Teilkammer verlassen kann.

Um das Überströmen des Fluids zwischen den Teilkammern zu ermöglichen, sind beide Teilkammern über einen Durchlaß des Arbeitsraums miteinander verbunden.

Eine besonders gute Beaufschlagung des Fluids wird dadurch erreicht, wenn das Fluid zwischen den beiden Kolben eingespannt ist.

Stehen die Kolben mit der Taumelscheibe permanent in Kontakt, ist zum einen die Rückstellung der Kolben gewährleistet. Zum anderen beaufschlagen beide Kolben das Fluid unabhängig von der Schwenkrichtung. Während der in eine Teilkammer eindringende Kolben das Fluid mit einem Überdruck beaufschlagt, erzeugt der aus der anderen Teilkammer ausfahrende Kolben einen Unterdruck in der anderen Kammer. Damit unterstützen beide Kolben das Überströmen des Fluids, wodurch eine besonders leichtgängige Feststellvorrichtung erzeugt werden kann.

Ein permanenter Kontakt zwischen Kolben und Taumelscheibe ist gewährleistet, wenn die Kolben mittels Federn gegen die Taumelscheibe gespannt sind. Die Federn können sowohl Wendel- als auch Tellerfedern sein. Konstruktiv gestaltet sich die Vorrichtung besonders einfach, wenn die Federn in den Teilkammern angeordnet sind und sich gegen die Steuervorrichtung abstützen.

Auf die Verwendung von Federn kann verzichtet werden, wenn die Kolben mittels Formschluß, insbesondere über Rast- und Steckverbindungen, mit der Taumelscheibe verbunden sind. Um eine ungestörte Relativbewegung zwischen dem Kolbenende und der Taumelscheibe zu ermöglichen, ist das Kolbenende kugel- oder kegelförmig ausgebildet, das in einer entsprechend gestalteten Aufnahme an der Taumelscheibe gelagert ist.

Um einen größtmöglichen Hub zwischen den beiden Kolben zu gewährleisten, sind beide Kolben auf der Taumelscheibe in einem großen Abstand vom Zentrum der Taumelscheibe angeordnet. Die entgegengesetzte Bewegung der Kolben wird erreicht, wenn beide Kolben auf der Taumelscheibe einen Winkelabstand von 180° aufweisen. Als besonders günstig haben sich inkompressible Fluide erwiesen, da diese Fluide nahezu ohne Verzögerung Druck aufbauen.

Unter gewissen Randbedingungen kann der Verschwenkwinkel des zu verschwenkenden Teils für die Feststellvorrichtung zu gering sein. In diesen Fällen ist der Hub der Kolben nicht ausreichend, um die Steuervorrichtung anzusteuern. Es hat sich daher als vorteilhaft erwiesen, ein Getriebe vorzusehen, weiches die Schwenkbewegung in eine größere Drehbewegung der Taumelscheibe umsetzt.

Das Getriebe kann sowohl zwischen der Taumelscheibe und der Welle als auch zwischen der Welle und dem die Welle betätigenden Stellglied angeordnet sein.

Einen zuverlässigen Schutz gegen Umwelteinflüsse erfährt das Getriebe, wenn es innerhalb des Gehäuses angeordnet ist. Dagegen lassen sich vorhandene Feststellvorrichtungen mit dem Getriebe einfach nachrüsten, wenn dieses außen am Gehäuse befestigt ist. Ein zusätzliches Gehäuse schützt das Getriebe in diesem Fall vor äußeren Einflüssen.

In der Feststellvorrichtung können sich aufgrund von Temperatureinflüssen die Druckverhältnisse im Gehäuse verändern, die ihrerseits auf die federbelasteten Rückschlagventile wirken. Mit einer Temperaturkompensation in Form eines im Arbeitsraum auf der den Kolben abgewandten Seite befindlichen Gasvolumens lassen sich auf besonders einfache Weise gleichbleibende Druckverhältnisse innerhalb des Gehäuses erreichen, wodurch die Feststellvorrichtung stets dasselbe Verhalten aufweist. Reaktionen zwischen dem Gasvolumen und dem Fluid lassen sich einfach vermeiden, wenn zwischen beiden eine Membran angeordnet ist.

Das Gasvolumen ist konstruktiv besonders einfach anzuordnen, wenn es sich in dem Durchlaß zwischen beiden Teilkammern befindet.

Ausführungsbeispiele der Erfindung sind in der Zeichnung dargestellt und werden im folgenden näher erläutert. Es zeigen
- Figur 1:: eine Ausführungsform der erfindungsgemäßen Feststellvorrichtung im eingebauten Zustand und
- Figur 2:: einen Schnitt durch die Feststellvorrichtung nach Figur 1.

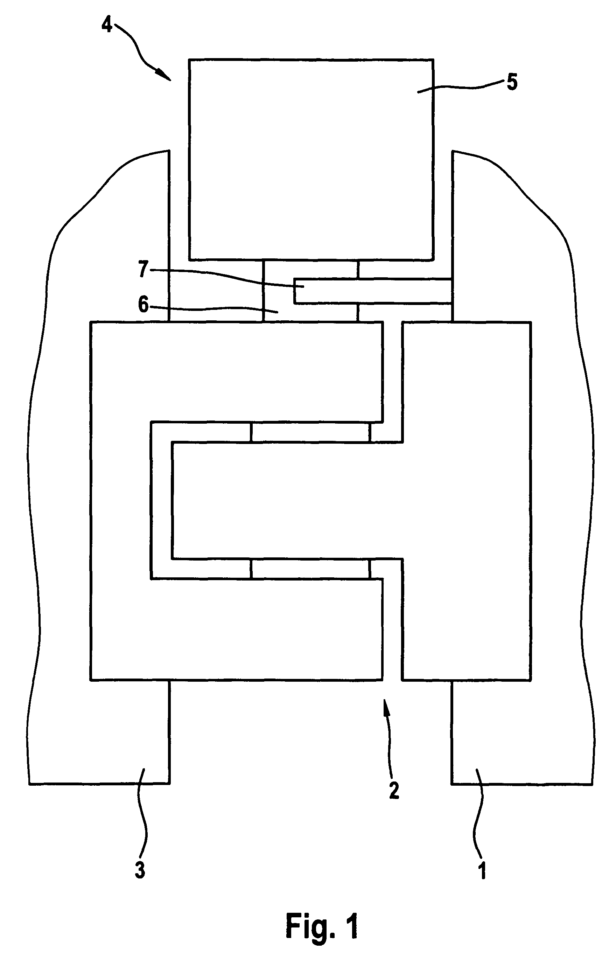

In Figur 1 ist ein Teil einer Kraftfahrzeugtür 1 dargestellt, die mittels eines Scharniers 2 an der Karosserie 3 schwenkbar befestigt ist. Oberhalb des Scharniers 2 ist an der Karosserie 3 eine stufenlos blockierbare Feststellvorrichtung 4 in der Schwenkachse der Kraftfahrzeugtür 1 angeordnet. Die Feststellvorrichtung 4 besitzt ein Gehäuse 5, das an einer Stelle von einer Welle 6 durchdrungen wird. Über ein Stellglied 7 ist die Welle 6 mit der Kraftfahrzeugtür 1 verbunden, so daß beim Verschwenken der Kraftfahrzeugtür 1 die Welle 6 verdreht wird.

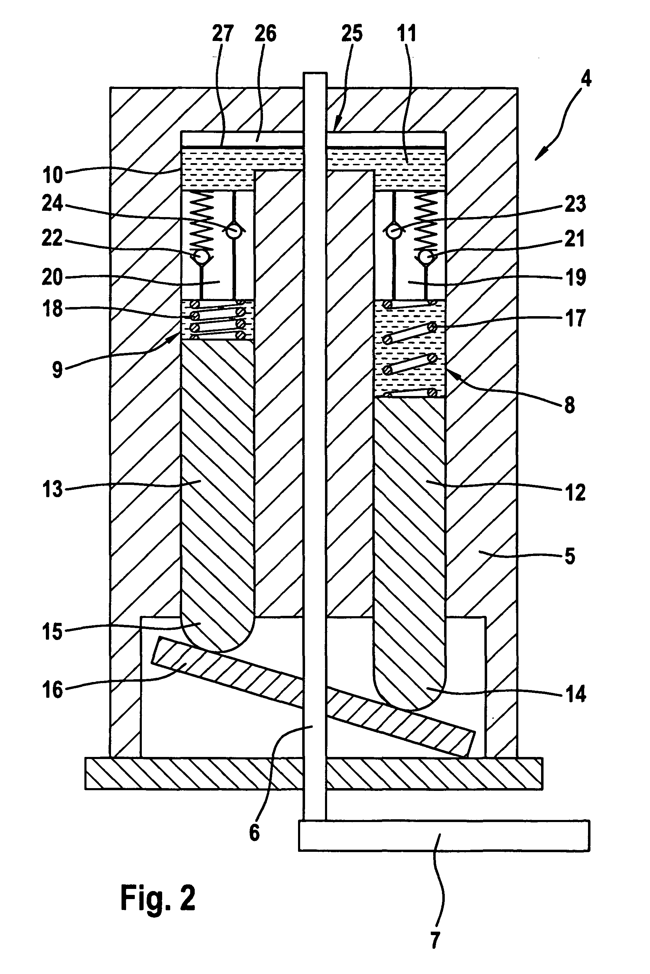

In dem Gehäuse 5 der in Figur 2 dargestellten Feststellvorrichtung 4 befindet sich ein aus zwei Teilkammern 8, 9 bestehender Arbeitsraum 10, der mit einem Fluid 11 gefüllt ist. In den Teilkammern 8, 9 ist jeweils ein Kolben 12, 13 verschiebbar angeordnet. Die Kolben 12, 13 stehen mit ihren außerhalb der Teilkammern 8, 9 angeordneten Enden 14, 15 mit einer Taumelscheibe 16 in Verbindung. Die Taumelscheibe 16 ihrerseits ist über die Welle 6 mit dem Stellglied 7 verbunden, welches bei einer Schwenkbewegung der Kraftfahrzeugtür die Welle 6 in Drehung versetzt. Um einen permanenten Kontakt der Kolben 12, 13 mit der Taumelscheibe 16 zu gewährleisten, werden die Kolben 12, 13 von jeweils einer Feder 17, 18 gegen die Taumelscheibe 16 vorgespannt.

In jeder Teilkammer 8, 9 ist eine Steuervorrichtung 19, 20 angeordnet. In den Steuervorrichtungen 19, 20 sind je ein Blockierventil 21, 22 und je ein Durchlaßventil 23, 24 angeordnet. Während die Ventile 23, 24 einfache Rückschlagventile sind, die in Richtung des in der jeweiligen Teilkammer 8, 9 befindlichen Kolbens öffnen, sind die Blockierventile 21, 22 federbelastet und in Richtung der anderen Teilkammer öffnend. Die beiden Teilkammern 8, 9 sind durch einen Übergang 25 miteinander verbunden, so daß das in dem Arbeitsraum 10 befindliche Fluid 11 zwischen beiden Teilkammern 8, 9 überströmen kann. Im Übergang 25 befindet sich oberhalb des Fluid 11 ein Gasvolumen 26, welches durch eine Membran 27 vom Fluid 11 getrennt ist.

In der gezeigten Anordnung ist die Kraftfahrzeugtür geschlossen. In dieser Stellung ist die Taumelscheibe 16 derart positioniert, daß sich der Kolben 13 in seinem oberen Umkehrpunkt in der Teilkammer 9 befindet, während sich der Kolben 12 in der Teilkammer 8 in seinem unteren Umkehrpunkt befindet. Alle Ventile 21 - 24 sind geschlossen. Die beiden federbelasteten Blockierventile 21, 22 verhindern ein Überströmen des Fluids zwischen den beiden Teilkammern 8, 9 so daß die Feststellvorrichtung 4 blockiert ist. Wird die Kraftfahrzeugtür verschwenkt, dreht sich die Welle 6 und mit ihr die Taumelscheibe 16. Aufgrund der durch die Federn 17, 18 gegen die Taumelscheibe 16 vorgespannten Kolben 12, 13 bewegt sich der Kolben 12 in die Teilkammer 8 hinein, während der Kolben 13 das entgegengesetzte Verhalten aufweist. Der durch die Bewegung des Kolbens 12 in die Teilkammer 8 erzeugte Druck öffnet das Blockierventil 21 in der Steuervorrichtung 19, während das Durchlaßventil 23 geschlossen bleibt. Sobald ein Blockierventil geöffnet ist, wird die Blockierung der Feststellvorrichtung 4 aufgehoben. Das Fluid 11 strömt nunmehr durch das Blockierventil 21 und den Durchlaß 25 in die Teilkammer 9, wobei es die Steuereinrichtung 20 lediglich durch das Durchlaßventil 24 passieren kann. Das Blockierventil 22 ist geschlossen. Das Überströmen des Fluids 11 wird zusätzlich durch die Bewegung des Kolbens 13 aus der Teilkammer 9 unterstützt.

### Bezugszeichenliste

- 1: Kraftfahrzeugtür
- 2: Scharnier
- 3: Karosserie
- 4: Feststellvorrichtung
- 5: Gehäuse
- 6: Welle
- 7: Stellglied
- 8: Teilkammer
- 9: Teilkammer
- 10: Arbeitsraum
- 11: Fluid
- 12: Kolben
- 13: Kolben
- 14: Ende
- 15: Ende
- 16: Taumelscheibe
- 17: Feder
- 18: Feder
- 19: Steuervorrichtung
- 20: Steuervorrichtung
- 21: Blockierventil
- 22: Blockierventil
- 23: Durchlaßventil
- 24: Durchlaßventil
- 25: Übergang
- 26: Gasvolumen
- 27: Membran

## Patentansprüche

1. Stufenlos blockierbare Feststellvorrichtung, mit einem Gehäuse und einer außerhalb des Gehäuses drehbar beaufschlagbaren Welle, die in das Gehäuse ragt, mit einem in dem Gehäuse befindlichen fluidgefüllten Arbeitsraum mit einem bewegbaren Kolben und einem Blockierventil, **dadurch gekennzeichnet, daß** der Arbeitsraum (10) zwei mit ihm verbindbare nebeneinander liegende Teilkammern (8, 9) aufweist, in denen die Kolben (12,13) verschiebbar geführt und von einer Taumelscheibe (16) verschiebbar antreibbar sind, wobei die Taumelscheibe (16) durch die Welle (6) drehbar antreibbar ist, mit je einer Steuervorrichtung (19, 20) der Teilkammern (8, 9), durch die über Blockierventile (21, 22) die Teilkammern (8, 9) mit dem Arbeitsraum (10) und über Durchlaßventile (23, 24) der Arbeitsraum (10) mit den Teilkammern (8, 9) verbindbar sind.

2. Stufenlos blockierbare Feststellvorrichtung nach Anspruch 1, **dadurch gekennzeichnet, daß** die Blockierventile (21, 22) federbelastete Rückschlagventile sind.

3. Stufenlos blockierbare Feststellvorrichtung nach Anspruch 2, **dadurch gekennzeichnet, daß** die Blockierventile (21, 22) in Richtung der jeweils anderen Teilkammer (8, 9) öffnen.

4. Stufenlos blockierbare Feststellvorrichtung nach einem der vorhergehenden Ansprüche, **dadurch gekennzeichnet, daß** die Steuervorrichtungen (19, 20) je ein als Rückschlagventil ausgebildetes Durchlaßventil (23, 24) aufweisen.

5. Stufenlos blockierbare Feststellvorrichtung nach einem der vorhergehenden Ansprüche, **dadurch gekennzeichnet, daß** die beiden Teilkammern (8, 9) mit einem Durchlaß (25) des Arbeitsraumes (10) miteinander verbunden sind.

6. Stufenlos blockierbare Feststellvorrichtung nach einem der vorhergehenden Ansprüche, **dadurch gekennzeichnet, daß** die Kolben (12, 13) mittels Formschluß mit der Taumelscheibe (16) verbunden sind.

7. Stufenlos blockierbare Feststellvorrichtung nach einem der vorhergehenden Ansprüche, **dadurch gekennzeichnet, daß** ein Ende (14, 15) der Kolben (12, 13) kugel- oder kegelförmig ausgebildet ist und die Taumelscheibe (16) eine Aufnahme für dieses Ende (14, 15) aufweist.

8. Stufenlos blockierbare Feststellvorrichtung nach einem der vorhergehenden Ansprüche 1 bis 6, **dadurch gekennzeichnet, daß** die Kolben (12, 13) mit Federn (17, 18), vorzugsweise Teller- oder Wendelfedern, gegen die Taumelscheibe (16) vorgespannt sind.

9. Stufenlos blockierbare Feststellvorrichtung nach einem der vorhergehenden Ansprüche, **dadurch gekennzeichnet, daß** die Steuervorrichtung (19, 20) Abstützungen für die in den jeweiligen Teilkammern (8, 9) angeordneten Federn (17, 18) bilden.

10. Stufenlos blockierbare Feststellvorrichtung nach einem der vorhergehenden Ansprüche, **dadurch gekennzeichnet, daß** die Kolben (12, 13) in einem Winkelabstand von 180° auf der Taumelscheibe (16) angeordnet sind.

11. Stufenlos blockierbare Feststellvorrichtung nach einem der vorhergehenden Ansprüche, **dadurch gekennzeichnet, daß** die Welle (6) mit einem Stellglied (7) verbunden ist, durch das die Welle (6) drehbar antreibbar ist..

12. Stufenlos blockierbare Feststellvorrichtung nach einem der vorhergehenden Ansprüche, **dadurch gekennzeichnet, daß** zwischen der Welle (6) und der Taumelscheibe (16) oder zwischen dem Stellglied (7) und der Taumelscheibe (16) ein Getriebe, vorzugsweise ein Übersetzungsgetriebe, angeordnet ist.

13. Stufenlos blockierbare Feststellvorrichtung nach einem der vorhergehenden Ansprüche, **dadurch gekennzeichnet, daß** die Welle (6) koaxial zur Schwenkachse eines zu verschwenkenden Teils (1) oder parallel zu dieser angeordnet ist.

14. Stufenlos blockierbare Feststellvorrichtung nach einem der vorhergehenden Ansprüche, **dadurch gekennzeichnet, daß** in dem Arbeitsraum (10) auf der den Kolben (12, 13) abgewandten Seite ein Gasvolumen (26), vorzugsweise Luft, angeordnet ist.

15. Stufenlos blockierbare Feststellvorrichtung nach Anspruch 14, **dadurch gekennzeichnet, daß** eine Membran (27) zwischen dem Fluid (11) und dem Gasvolumen (26) angeordnet ist.

## Claims

1. Progressively blockable arresting device having a housing and a shaft which can be acted upon outside the housing in a manner causing it to rotate and which protrudes into the housing, and having a fluid-filled working space which is situated in the housing and has a movable piston and a blocking valve, **characterized in that** the working space (10) has two subchambers (8, 9) which can be connected to it, lie next to each other and in which the pistons (12, 13) are guided in a displaceable manner and can be driven in a displaceable manner by a swash plate (16), the swash plate (16) being driveable in a rotatable manner by the shaft (6), with respective control devices (19, 20) in the subchambers (8, 9), by means of which the subchambers (8, 9) can be connected to the working space (10) via blocking valves (21, 22) and the working space (10) can be connected to the subchambers (8, 9) via passage valves (23, 24).

2. Progressively blockable arresting device according to Claim 1, **characterized in that** the blocking valves (21, 22) are spring-loaded non-return valves.

3. Progressively blockable arresting device according to Claim 2, **characterized in that** the blocking valves (21, 22) open in the direction of the upper subchamber (8, 9) in each case.

4. Progressively blockable arresting device according to one of the preceding claims, **characterized in that** the control devices (19, 20) have a respective passage valve (23, 24) which is designed as a non-return valve.

5. Progressively blockable arresting device according to one of the preceding claims, **characterized in that** the two subchambers (8, 9) are connected to each other by a passage (25) in the working space (10).

6. Progressively blockable arresting device according to one of the preceding claims, **characterized in that** the pistons (12, 13) are connected to the swash plate (16) by means of a form-fitting connection.

7. Progressively blockable arresting device according to one of the preceding claims, **characterized in that** one end (14, 15) of the pistons (12, 13) is of spherical or conical design and the swash plate (16) has a receptacle for this end (14, 15).

8. Progressively blockable arresting device according to one of the preceding Claims 1 to 6, **characterized in that** the pistons (12, 13) are prestressed against the swash plate (16) by springs (17, 18), preferably disc or helical springs.

9. Progressively blockable arresting device according to one of the preceding claims, **characterized in that** the control devices (19, 20) form supports for the springs (17, 18) arranged in the respective subchambers (8, 9).

10. Progressively blockable arresting device according to one of the preceding claims, **characterized in that** the pistons (12, 13) are arranged at an angular spacing of 180° on the swash plate (16).

11. Progressively blockable arresting device according to one of the preceding claims, **characterized in that** the shaft (6) is connected to an actuating element (7) by means of which the shaft (6) can be driven in a rotatable manner.

12. Progressively blockable arresting device according to one of the preceding claims, **characterized in that** a gear mechanism, preferably a step-up gear mechanism, is arranged between the shaft (6) and the swash plate (16) or between the actuating element (7) and the swash plate (16).

13. Progressively blockable arresting device according to one of the preceding claims, **characterized in that** the shaft (6) is arranged coaxially with the pivot axis of a part (1) to be pivoted or parallel to the said axis.

14. Progressively blockable arresting device according to one of the preceding claims, **characterized in that** a volume of gas (26), preferably air, is arranged in the working space (10) on the side facing away from the pistons (12, 13).

15. Progressively blockable arresting device according to Claim 14, **characterized in that** a membrane (27) is arranged between the fluid (11) and the volume of gas (26).

## Revendications

1. Dispositif d'arrêt à blocage en continu comportant un boîtier et un arbre pouvant être entraîné en rotation à l'extérieur du boîtier, lequel arbre pénètre dans le boîtier, un espace de travail rempli de fluide situé dans le boîtier, un piston mobile et une soupape de blocage, **caractérisé en ce que** l'espace de travail (10) présente deux chambres partielles (8, 9) situées l'une à côté de l'autre, pouvant être mises en communication avec celui-ci, dans lesquelles les pistons (12, 13) sont guidés de façon à pouvoir se déplacer et peuvent être entraînés en déplacement par un disque en nutation (16), le disque en nutation (16) pouvant être entraîné en rotation par l'arbre (6), comportant chacune un dispositif de commande (19, 20) dans les chambres partielles (8, 9), au moyen duquel les chambres partielles (8, 9) peuvent être mises en communication avec l'espace de travail (10) par l'intermédiaire de soupapes de blocage (21, 22) et l'espace de travail (10) mis en communication avec les chambres partielles (8, 9) par l'intermédiaire de soupapes de passage (23, 24).

2. Dispositif d'arrêt à blocage en continu selon la revendication 1, **caractérisé en ce que** les soupapes de blocage (21, 22) sont des soupapes antiretour contraintes par un ressort.

3. Dispositif d'arrêt à blocage en continu selon la revendication 2, **caractérisé en ce que** les soupapes de blocage (21, 22) s'ouvrent chacune en direction de l'autre chambre partielle (8, 9).

4. Dispositif d'arrêt à blocage en continu selon l'une quelconque des revendications précédentes, **caractérisé en ce que** les dispositifs de commande (19, 20) présentent chacun une soupape de passage (23, 24) conformée en tant que soupape antiretour.

5. Dispositif d'arrêt à blocage en continu selon l'une quelconque des revendications précédentes, **caractérisé en ce que** les deux chambres partielles (8, 9) communiquent entre elles par l'intermédiaire d'un passage (25) de l'espace de travail (10).

6. Dispositif d'arrêt à blocage en continu selon l'une quelconque des revendications précédentes, **caractérisé en ce que** les pistons (12, 13) sont reliés au disque en nutation (16) par fermeture géométrique.

7. Dispositif d'arrêt à blocage en continu selon l'une quelconque des revendications précédentes, **caractérisé en ce qu'**une extrémité (14, 15) des pistons (12, 13) est de forme sphérique ou conique et le disque en nutation (16) présente un logement destiné à ladite extrémité (14, 15).

8. Dispositif d'arrêt à blocage en continu selon l'une quelconque des revendications 1 à 6, **caractérisé en ce que** les pistons (12, 13) sont précontraints par des ressorts (17, 18), de préférence des ressorts hélicoïdaux ou des ressorts Belleville, contre le disque en nutation (16).

9. Dispositif d'arrêt à blocage en continu selon l'une quelconque des revendications précédentes, **caractérisé en ce que** les dispositifs de commande (19, 20) forment des appuis destinés aux ressorts (17, 18) disposés dans chacune des chambres partielles (8, 9).

10. Dispositif d'arrêt à blocage en continu selon l'une quelconque des revendications précédentes, **caractérisé en ce que** les pistons (12, 13) sont disposés à une distance angulaire de 180° sur le disque en nutation (16).

11. Dispositif d'arrêt à blocage en continu selon l'une quelconque des revendications précédentes, **caractérisé en ce que** l'arbre (6) est relié à un élément de commande (7), au moyen duquel l'arbre (6) peut être entraîné en rotation.

12. Dispositif d'arrêt à blocage en continu selon l'une quelconque des revendications précédentes, **caractérisé en ce qu'**un mécanisme, de préférence un mécanisme multiplicateur, est disposé entre l'arbre (6) et le disque en nutation (16) ou entre l'élément de commande (7) et le disque en nutation (16).

13. Dispositif d'arrêt à blocage en continu selon l'une quelconque des revendications précédentes, **caractérisé en ce que** l'arbre (6) est disposé de façon coaxiale à l'axe de pivotement d'un élément (1) à faire pivoter ou de façon parallèle à celui-ci.

14. Dispositif d'arrêt à blocage en continu selon l'une quelconque des revendications précédentes, **caractérisé en ce qu'**un volume de gaz (26), de préférence de l'air, est disposé dans l'espace de travail (10) du côté détourné des pistons (12, 13).

15. Dispositif d'arrêt à blocage en continu selon la revendication 14, **caractérisé en ce qu'**une membrane (27) est disposée entre le fluide (11) et le volume de gaz (26).
